# EUROPÄISCHE PATENTSCHRIFT

(11) **EP 0 898 005 B1**
(45) Veröffentlichungstag und Bekanntmachung des Hinweises auf die Patenterteilung: **12.06.2002**
(21) Anmeldenummer: 98115130.1
(22) Anmeldetag: 12.08.1998
(51) Int. Cl.: D06F 39/02, G01F 19/00

(54) **Dosiervorrichtung für schüttfähige Produkte**
Dosing device for pourable products
Dispositif doseur pour produits déversables

(30) Priorität: 20.08.1997 DE 19736078
(43) Veröffentlichungstag der Anmeldung: 24.02.1999
(73) Patentinhaber: Henkel Kommanditgesellschaft auf Aktien, 40589 Düsseldorf-Holthausen (DE)
(72) Erfinder: Barthel, Wolfgang, Dr.-Ing, 40589 Düsseldorf (DE); Bosserhoff, Georg, 40764 Langenfeld (DE); Mühlhausen, Georg, 40597 Düsseldorf (DE)

(56) Entgegenhaltungen:
- EP-A- 0 253 419
- DE-A- 19 538 989
- DE-C- 440 957
- US-A- 3 416 375
- US-A- 3 798 975
- US-A- 5 002 208
- DATABASE WPI Section PQ, Week 9739 Derwent Publications Ltd., London, GB; Class P28, AN 97-418916 XP002099488 -& JP 07 286885 A (NIPPON CROWN CORK KK) , 31. Oktober 1995

## Beschreibung

Die Erfindung betrifft eine Dosiervorrichtung für schüttfähige Produkte mit einem oberseitig offenen Dosierbehältnis.

Derartige Dosiervorrichtungen sind insbesondere zur Dosierung von Waschmittelpulver bekannt. Diese Dosiervorrichtungen bestehen üblicherweise aus einem Dosierbehältnis, welches als Meßgefäß ausgebildet ist, d.h. an einer Seitenwand mit einer Meßmarkierung versehen ist. Aufgrund der Vielzahl verschiedener Waschmittelprodukte gibt es jedoch unterschiedlich große Dosiervorrichtungen, die je nach Dosiermenge ein unterschiedliches Volumen aufnehmen können. Dies hat jedoch Nachteile. So ist es bei einem großvolumigen Meßgefäß ungünstig, kleine Mengen zu dosieren. Demgegenüber müssen bei kleinvolumigen Gefäßen für größere Dosiermengen mehrmalige Dosiervorgänge durchgeführt werden. Dies führt dazu, daß es verschieden große Dosiervorrichtungen dieser Art gibt, was zum einen die Handhabung erschwert, weil der Anwender jeweils das richtige Dosierbehältnis auswählen muß, zum anderen ist dies aus Umweltgesichtspunkten nicht akzeptabel, da im Prinzip unnötig viele verschiedene Dosiervorrichtungen produziert werden müssen, die häufig nach Aufbrauch einer Waschmittelverpackung weggeworfen werden.

Aus der Druckschrift JP 07 286 885 ist eine Dosiervorrichtung für schüttfähige Produkte bekannt, bei der eine untere Wand in eingeschwenkter und in maximal ausgeschwenkter Position arretierbar ist, wodurch verschieden große Meßbechervolumina einstellbar sind.

Aufgabe der Erfindung ist es deshalb, eine Dosiervorrichtung so zu verbessern, daß sie universell einsetzbar ist, d.h. für unterschiedliche Waschmittelprodukte, wobei die Handhabung und Dosierung einfach und übersichtlich sein soll.

Diese Aufgabe wird mit einer Dosiervorrichtung der eingangs bezeichneten Art erfindungsgemäß dadurch gelöst, daß das ausschwenkbare schüttenförmige Element gegenüber dem Dosierbehältnis gebildet ist.

Mit der erfindungsgemäßen Dosiervorrichtung ist es möglich, das Volumen der Vorrichtung zu verändern, je nachdem, welches Waschmittelprodukt dosiert werden soll. Werden beispielsweise konzentrierte Waschmittelpulver eingesetzt, so wird das schüttenförmige Element eingeschwenkt, so daß nur noch ein kleineres Dosiervolumen zur Verfügung steht, für herkömmliche Waschmittel wird das große Volumen eingestellt, indem das schüttenförmige Element maximal ausgeschwenkt wird. Durch die Arretiermöglichkeit des schüttenförmigen Elementes in den Ausschwenkpositionen steht dabei jeweils ein stabiles Dosierbehältnis zur Verfügung. Die Handhabung ist dabei ausgesprochen einfach, es ist lediglich erforderlich, mit einer gewissen Kraftaufbringung zur Überwindung der Arretierung das Volumen der Dosiervorrichtung in Anpassung an das jeweilige Produkt einzustellen.

Vorzugsweise ist dabei vorgesehen, daß das schüttenförmige Element mit seinen seitlichen Außenwandungen bereichsweise die zugeordneten Seitenwände des Dosierbehältnisses von
außen umschließt. Durch diese Ausgestaltung wird die Handhabung erleichtert, da man zur Verschwenkung des schüttenförmigen Elementes einfach dessen Seitenwandungen mit der Hand ergreifen kann.

Vorzugsweise ist vorgesehen, daß an der Außenseite des schüttenförmigen Elementes eine erste Füllstandsmarkierung angeordnet ist, mit welcher die Dosierung der jeweils gewünschten Schüttgutmenge möglich ist.

Besonders vorteilhaft ist vorgesehen, daß am Dosierbehältnis eine zweite Füllstandsmarkierung angeordnet ist. Diese beiden Füllstandsmarkierungen sind dann selbstverständlich unterschiedlich gestaltet, die eine ist auf das kleinere und die andere auf das größere Volumen abgestimmt.

Zur weiteren Vereinfachung der Handhabung ist dabei ganz besonders vorteilhaft vorgesehen, daß die zweite Füllstandsmarkierung derart an einer Seitenwand des Dosierbehältnisses angeordnet ist, daß sie in eingeschwenkter Position des schüttenförmigen Elementes von einer Seitenwandung des schüttenförmigen Elementes verdeckt ist. In dieser Position ist dann nur die erste Füllstandsmarkierung sichtbar, die eine zutreffende Dosierung in Anpassung an das kleinere Behältervolumen ermöglicht (eingeschwenkte Position).

In besonders vorteilhafter weiterer Ausgestaltung ist vorgesehen, daß an einer Außenwand des Dosierbehältnisses ein den Füllstandsmarkierungen zugeordnetes vertikal verschiebbares Anzeigeelement zur Einstellung der Wasserhärte vorgesehen ist. Während es bisher üblich ist, auf der Waschmittelverpackung Hinweise anzugeben, welche Dosiermenge bei einer bestimmten Wasserhärte zweckmäßig ist, kann durch dieses verschiebbare Anzeigeelement die Einstellung der Wasserhärte an der Dosiervorrichtung selbst erfolgen, was die Handhabung wesentlich vereinfacht.

Dabei ist vorteilhaft das Anzeigeelement verschiebbar in wenigstens einer Nut an der Außenseite des Dosierbehältnisses geführt.

Die Erfindung ist nachstehend anhand der Zeichnung bei- spielsweise näher erläutert. Diese zeigt in:
- Fig. 1: in perspektivischer Darstellung eine erfindungsgemäße Dosiervorrichtung mit eingeschwenktem schüttenförmigen Element,
- Fig. 2: die Dosiervorrichtung nach Fig. 1 in ausgeschwenkter Lage, ebenfalls in perspektivischer Darstellung,
- Fig.3: eine zweite Ausführungsform einer erfindungsgemäßen Dosiervorrichtung in Seitenansicht in eingeschwenkter Lage,
- Fig. 4: die Dosiervorrichtung nach Fig. 3 in ausgeschwenkter Lage und
- Fig. 5: eine Draufsicht auf die Dosiervorrichtung nach Fig. 4.

Eine Dosiervorrichtung für schüttfähige Produkte, beispielsweise Waschmittelpulver, weist zunächst ein Dosierbehältnis 1 auf, welches oberseitig offen ist und bei dem die vordere Seitenwand fehlt. Dieser Bereich kann allerdings aus Stabilitätsgründen mit einem oberen Seitensteg 2 überbrückt sein. Der Bereich der fehlenden vorderen Seitenwand des Dosierbehältnisses 1 ist von einem schüttenförmigen Element 3 verschließbar. Dieses schüttenförmige Element 3 weist zwei gegenüberliegende seitliche Außenwandungen 4 auf, die das Dosierbehältnis an dessen Seitenwänden 5, 6 mehr oder weniger umschließen. Dazu ist die jeweilige Außenwandung 4 in ihrem unteren Bereich verschwenkbar an der Seitenwand 5 bzw. 6 angelenkt, wozu in der jeweiligen Außenwandung 4 eine Öffnung 7 ausgespart ist, während in den beiden Seitenwänden 5, 6 Drehzapfen 8 angeformt sind.

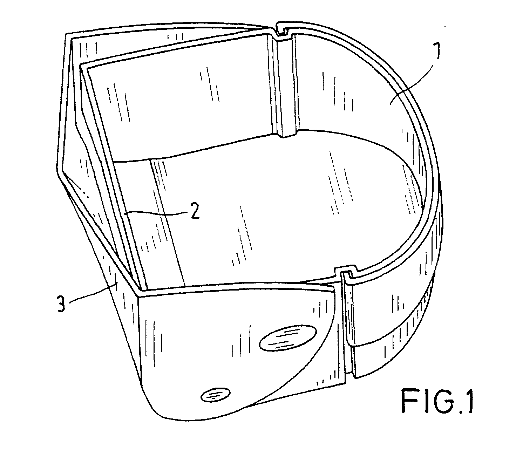

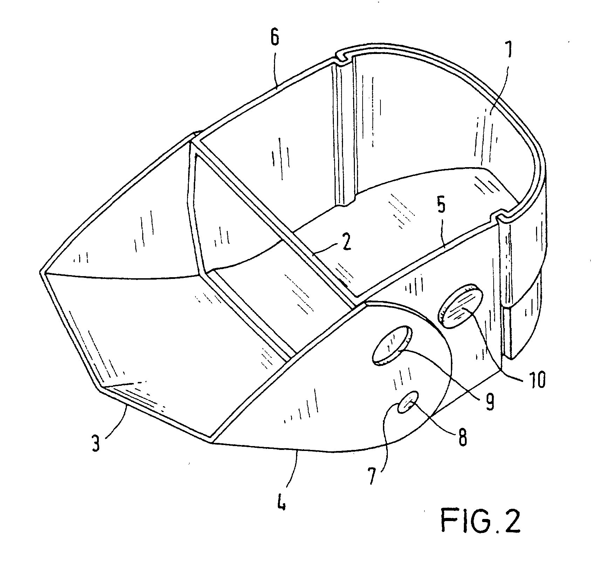

Durch diese verschwenkbare Anordnung des schüttenförmigen Elementes 3 läßt sich das Volumen des Dosierbehälters 1 in zwei Stellungen einstellen, nämlich einmal in vollständig eingeschwenkter Position (Figur 1) mit geringstem Volumen und zum anderen in maximal ausgeschwenkter Position (Figur 2) mit maximalem Füllvolumen. In diesen beiden Stellungen ist das schüttenförmige Element 3 jeweils arretierbar. Dazu ist im oberen Bereich der beiden Außenwandungen 4 des schüttenförmigen Elementes 3 jeweils eine Arretieröffnung 9 ausgespart, während an den Seitenwänden 5 und 6 des Dosierbehältnisses 1 Rastnocken 10 angeformt sind. Diese können ggf. rampenförmig ausgebildet sein. Die Arretierbarkeit in der anderen Richtung (maximal ausgeschwenkte Position gemäß Figur 2) wird durch einen nicht dargestellten Endanschlag am schüttenförmigen Element 3 erreicht sowie in der Gegenrichtung dadurch, daß der dem Rastnocken 10 zugewandte Rand der Außenwandungen 4 am Rastnocken 10 anliegt.

Erkennbar steht somit eine Dosiervorrichtung zur Verfügung, deren Volumen auf einfache Weise durch Ein- bzw. Ausschwenken des schüttenförmigen Elementes 3 verhindert werden kann.

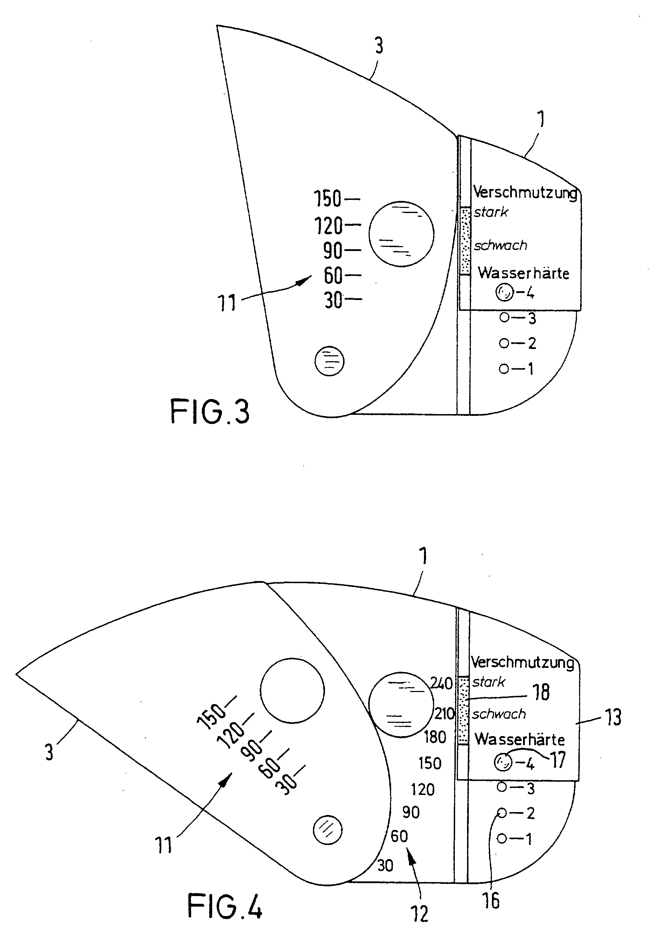

Die Ausführungsform nach Figuren 3 bis 5 unterscheidet sich von derjenigen nach Figuren 1 und 2 durch eine etwas andere Form und durch zusätzliche Elemente. Sofern gleiche Teile betroffen sind, sind dabei dieselben Bezugszeichen wie in den Figuren 1 und 2 verwandt.

Zusätzlich ist bei dieser Ausführungsform vorgesehen, daß an der Außenseite des schüttenförmigen Elementes 3 eine erste Füllstandsmarkierung 11 angeordnet ist. Darüber hinaus ist an der Seitenwand 5 des Dosierbehältnisses 1 eine zweite Füllstandsmarkierung 12 angeordnet. Diese ist so angeordnet, daß sie nur dann sichtbar ist, wenn sich das schüttenförmige Element 3 in der ausgeschwenkten Position befindet (Figur 4). In eingeschwenkter Position (Figur 3) ist diese zweite Füllstandsmarkierung 12 für den Anwender nicht sichtbar.

Beide Füllstandsmarkierungen 11 bzw. 12 sind auf das jeweilige Füllvolumen des Dosierbehältnisses 1 abgestimmt. in eingeschwenkter Position des schüttenförmigen Elementes 3 ist die erste Füllstandsmarkierung 11 maßgeblich, in der ausgeschwenkten Position des schüttenförmigen Elementes 3 die zweite Füllstandsmarkierung 12.

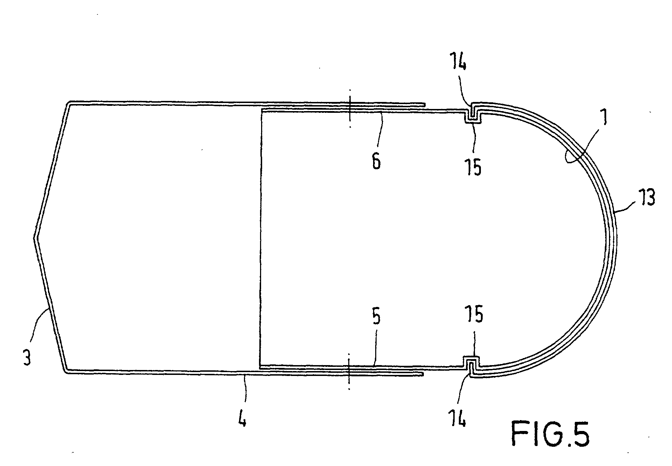

Darüber hinaus ist bei dieser Ausführungsform der Dosiervorrichtung vorteilhaft an der Außenwand 5 des Dosierbehältnisses 1 ein den Füllstandsmarkierungen 11 bzw. 12 zugeordnetes, vertikal verschiebbares Anzeigeelement 13 zur Einstellung der Wasserhärte vorgesehen. Wie am besten aus Figur 5 hervorgeht, ist dieses Anzeigeelement 13 vorzugsweise bügelförmig ausgebildet und endet beidendseitig in Raststegen 14, die jeweils verschiebbar in einer vertikalen Nut 15 in den Seitenwänden 5 bzw. 6 geführt ist. Dabei sind entlang des Verschiebeweges an der Außenseite des Dosierbehältnisses 1 Erhebungen 16 vorgesehen, während am schieberartigen Anzeigeelement 13 Vertiefungen 17 ausgebildet sind, welche bei Verschiebung entlang der Nut 14 in die jeweilige Erhebung 16 einrasten können.

Den jeweiligen Erhebungen 16 sind jeweils Zahlenwerte für den Wasserhärtegrad zugeordnet, auf dem schieberartigen Anzeigeelement 13 sind Markierungen 18 angeordnet, die sich auf den Verschmutzungsgrad der Wäsche beziehen.

Vor der Benutzung der Dosiervorrichtung wird einmal die Wasserhärte am schieberförmigen Anzeigeelement 13 eingestellt, wobei vorzugsweise dieses Element 13 mit Vorspannung am Dosierbehältnis 1 angeordnet ist, um ein besseres Einrasten zu gewährleisten. Durch die entsprechende Stellung des Anzeigeelementes 13 kann der Benutzer mittels der Markierung 18 auf dem Anzeigeelement 13 erkennen, welche Waschmitteldosiermenge in Abhängigkeit vom jeweiligen Verschmutzungsgrad der Wäsche benötigt wird. Diese Markierung 18 ist dabei sowohl der ersten als auch der zweiten Füllstandsanzeige 11, 12 zugeordnet.

Natürlich ist die Erfindung nicht auf die dargestellten Ausführungsbeispiele beschränkt. Weitere Ausgestaltungen sind möglich, ohne den Grundgedanken zu verlassen. So kann die Form des Behältnisses 1 selbstverständlich auch anders sein und dergl. mehr.

## Patentansprüche

1. Dosiervorrichtung für schüttfähige Produkte mit einem oberseitig offenen Dosierbehältnis, wobei eine Seitenwand als ausschwenkbares schüttenförmiges Element gebildet ist, das in eingeschwenkter und in maximal ausgeschwenkter Position arretierbar ist,
**dadurch gekennzeichnet,**
**daß** das ausschwenkbare schüttenförmige Element (3) gegenüber dem Dosierbehältnis (1) gebildet ist.

2. Dosiervorrichtung nach Anspruch 1,
**dadurch gekennzeichnet,**
**daß** das schüttenförmige Element (3) mit seinen seitlichen Außenwandungen (4) bereichsweise die zugeordneten Seitenwände (5,6) des Dosierbehältnisses (1) von außen umschließt.

3. Dosiervorrichtung nach Anspruch 1 oder 2,
**dadurch gekennzeichnet,**
**daß** an der Außenseite des schüttenförmigen Elementes (3) eine erste Füllstandsmarkierung (11) angeordnet ist.

4. Dosiervorrichtung nach Anspruch 1 oder einem der folgenden,
**dadurch gekennzeichnet,**
**daß** am Dosierbehältnis (1) eine zweite Füllstandsmarkierung (12) angeordnet ist.

5. Dosiervorrichtung nach Anspruch 4,
**dadurch gekennzeichnet,**
**daß** die zweite Füllstandsmarkierung (12) derart an einer Seitenwand des Dosierbehältnisses (1) angeordnet ist, daß sie in eingeschwenkter Position des schüttenförmigen Elementes (3) von einer Seitenwandung (4) des schüttenförmigen Elementes (3) verdeckt ist.

6. Dosiervorrichtung nach Anspruch 1 oder einem der folgenden,
**dadurch gekennzeichnet,**
**daß** an einer Außenwand des Dosierbehältnisses (1) ein den Füllstandsmarkierungen (11,12) zugeordnetes, vertikal verschiebbares Anzeigeelement (13) zur Einstellung der Wasserhärte vorgesehen ist.

7. Dosiervorrichtung nach Anspruch 6,
**dadurch gekennzeichnet,**
**daß** das Anzeigeelement (13) verschiebbar in wenigstens einer Nut (14) an der Außenseite des Dosierbehältnisses (1) geführt ist.

## Claims

1. A dosing device for pourable products comprising an upwardly open dosing container, one side wall being formed as a swing-out spout-like element which is designed to be locked in its closed position and in its fully lowered position, **characterized in that** the swing-out spout-like element (3) is formed opposite the dosing container (1).

2. A dosing device as claimed in claim 1, **characterized in that** the lateral outer walls (4) of the spout-like element (3) locally surround the associated side walls (5,6) of the dosing container (1) from outside.

3. A dosing device as claimed in claim 1 or 2, **characterized in that** a first level mark (11) is provided on the outside of the spout-like element (3).

4. A dosing device as claimed in claim 1 or any of the following claims, **characterized in that** a second level mark (12) is provided on the dosing container (1).

5. A dosing device as claimed in claim 4, **characterized in that** the second level mark (12) is located on a side wall of the dosing container (1) in such a way that, in the closed position of the spout-like element (3), it is covered by a side wall (4) of the spout-like element (3).

6. A dosing device as claimed in claim 1 or any of the following claims, **characterized in that** a vertically displaceable indicating element (13) for adjusting water hardness associated with the level marks (11,12) is provided on an outer wall of the dosing container (1).

7. A dosing device as claimed in claim 6, **characterized in that** the indicating element (13) is guided for displacement in at least one groove (14) on the outside of the dosing container (1).

## Revendications

1. Dispositif de dosage pour produits pouvant couler, comprenant un récipient de dosage ouvert en haut et dont une paroi latérale est constituée par un élément basculant, en forme de réservoir qui peut être immobilisé en une position relevée à une position de basculement maximal,
**caractérisé en ce que**
l'élément basculant (3) en forme de déversoir est basculant par rapport au récipient de dosage (1).

2. Dispositif de dosage selon la revendication 1,
**caractérisé en ce que**
par ses parois externes (4), l'élément (3) en forme de déversoir entouré extérieurement en partie les parois latérales associées (5, 6) du récipient de dosage (1).

3. Dispositif de dosage selon les revendications 1 ou 2,
**caractérisé en ce que**
sur la face externe de l'élément en forme de déversoir (3) se trouve un premier marquage (11) de l'état de remplissage.

4. Dispositif de dosage selon la revendication 1,
**caractérisé en ce que**
sur le récipient de dosage (1) se trouve un second marquage (12) de l'état de remplissage.

5. Dispositif de dosage selon la revendication 4,
**caractérisé en ce que**
le second marquage (12) de l'état de remplissage est disposé sur une paroi latérale du récipient de dosage (1) de manière qu'en position relevée de l'élément basculant (3) il est recouvert par cet élément.

6. Dispositif de dosage selon la revendication 1,
**caractérisé en ce que**
sur une paroi externe du récipient de dosage (1) est prévu un élément indicateur (13) associé aux marquages (11, 12) de l'état de remplissage, pouvant coulisser verticalement pour régler la dureté de l'eau.

7. Dispositif selon la revendication 6,
**caractérisé en ce que**
l'élément indicateur (13) peut coulisser dans au moins une rainure (14) creusée dans la face externe du récipient de dosage (1).
